# FASCICULE DE BREVET EUROPEEN

(11) **EP 2 981 743 B1**
(45) Date de publication et mention de la délivrance du brevet: **20.01.2021**
(21) Numéro de dépôt: 14715365.4
(22) Date de dépôt: 13.03.2014
(51) Int. Cl.: F16H 61/04

(54) **PROCEDE DE CONTROLE DU CRABOTAGE A L'ARRET D'UNE BOITE DE VITESSES**
VERFAHREN ZUR STEUERUNG EINER STATIONÄREN KUPPLUNG EINES GETRIEBES
METHOD FOR CONTROLLING STATIONARY CLUTCHING OF A GEARBOX

(30) Priorité: 05.04.2013 FR 1353082
(43) Date de publication de la demande: 10.02.2016
(73) Titulaire: Renault S.A.S., 92100 Boulogne-Billancourt (FR)
(72) Inventeur: VESPASIEN, Jean-Marie, F-94600 Choisy-le-Roi (FR); LALLERON, Vivien, F-91260 Juvisy-sur-Orge (FR)
(86) Numéro de dépôt international: PCT/FR2014/050572
(87) Numéro de publication internationale: WO 2014/162077

(56) Documents cités:
- WO-A1-2012/131259
- DE-A1- 19 530 233
- FR-A1- 2 912 484
- US-A1- 2007 225 113
- US-A1- 2008 314 176

## Description

La présente invention se rapporte au domaine de la commande des passages de vitesses sur des boîtes de vitesses à arbres parallèles, sans moyens de synchronisation mécaniques.

Plus précisément, elle a pour objet un procédé de contrôle du crabotage à l'arrêt d'un pignon fou sur un arbre secondaire de boîte de vitesses à arbres parallèles par déplacement d'un baladeur solidaire en rotation de cet arbre en direction du pignon, sans intervention d'organes de synchronisation mécaniques.

Cette invention trouve une application non limitative sur une transmission hybride pour véhicule automobile muni d'un moteur thermique et d'une machine électrique d'entraînement, comportant deux arbres primaires concentriques portant chacun au moins un pignon de descente sur un arbre secondaire relié aux roues du véhicule et un premier moyen de couplage entre deux arbres primaires pouvant occuper trois positions, dans lesquelles : le moteur thermique est découplé de la chaîne cinématique reliant la machine électrique aux roues, il entraîne les roues avec ou sans l'appoint de la machine électrique, ou il est couplé à la machine électrique pour additionner leurs couples.

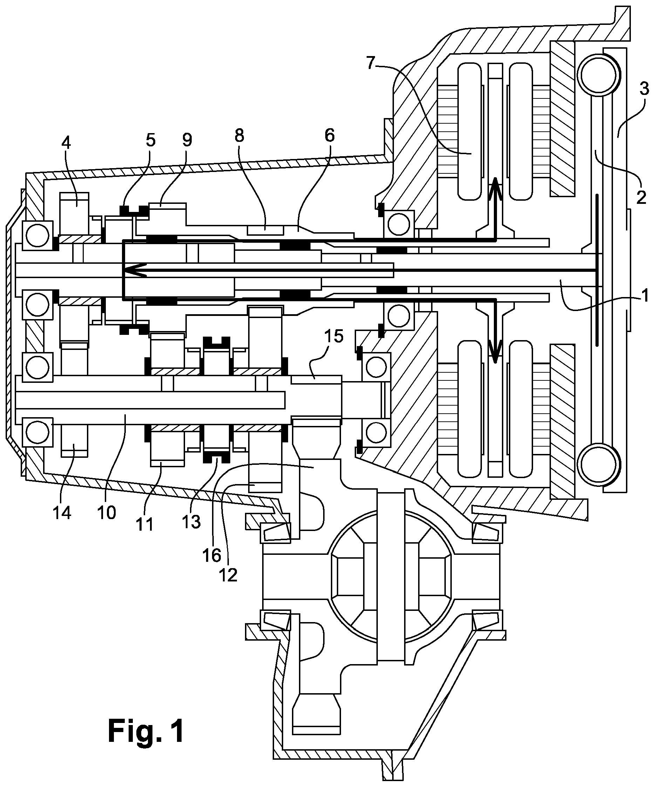

La figure 1 décrit un exemple non limitatif de transmission hybride relevant de ce principe d'architecture. Cette transmission, illustrée par la publication WO2012/131259, comporte un arbre primaire plein 1 connecté directement par l'intermédiaire d'un système de filtration (moyeu amortisseur, « damper », double volant ou autre) 2, au volant d'inertie 3 d'un moteur thermique (non représenté). L'arbre plein 1 porte un pignon fou 4 pouvant être connecté avec celui-ci par un premier système de couplage 5 (crabot, synchroniseur, ou autre type de coupleur progressif ou non). Un arbre primaire creux 6 est relié au rotor d'une machine électrique 7. L'arbre creux 6 porte deux pignons fixes 8, 9. Il peut être relié à l'arbre primaire plein 1 par l'intermédiaire du premier système de couplage 5. Un arbre secondaire 10 porte deux pignons fous 11 et 12. On peut relier les pignons fous 11, 12 à l'arbre primaire par l'intermédiaire d'un deuxième système de couplage 13 (crabot, synchroniseur, ou autre type de coupleur progressif ou non). L'arbre secondaire 10 porte également un pignon fixe 14 et un pignon de descente 15, vers un différentiel 16 relié aux roues du véhicule.

Comme indiqué plus haut, le premier moyen de couplage 5 peut occuper au moins trois positions, dans lesquelles :
- le moteur thermique est découplé de la chaîne cinématique reliant la machine électrique 7 aux roues (baladeur au centre) : la transmission est au neutre ou en mode électrique,
- le moteur thermique entraîne les roues avec ou sans l'appoint de la machine électrique (baladeur à gauche) : la transmission est en mode thermique ou hybride, et
- le moteur thermique et la machine électrique 7 sont couplés de manière à additionner, en direction des roues, leurs couples respectifs (baladeur à droite) : la transmission est en mode hybride, ou dans un mode de « recharge bord de route », où le moteur thermique n'entraîne pas les roues, mais fait tourner la machine électrique en générateur, pour recharger les batteries du véhicule.

Lorsqu'une boîte de vitesses ne comporte pas de moyens de synchronisation mécaniques entre des pignons fous et un arbre secondaire de boîte sur lequel ils doivent être crabotés, la synchronisation nécessaire au crabotage, peut être assurée en contrôlant le régime de l'arbre primaire, pour le « synchroniser » avec l'arbre secondaire, au rapport de démultiplication près. Ce contrôle s'effectue en ajustant le couple fourni par la, ou les, source (s) motrice(s) entraînant la ligne primaire de la boîte de vitesses. Dans le cas d'une transmission hybride, telle que celle qui est décrite ci-dessous, ces sources motrices sont le moteur thermique, la machine électrique, ou les deux, dans un mode de fonctionnement hybride où les deux arbres primaires concentriques sont liés en rotation (baladeur à droite).

Lorsque le véhicule est en déplacement, l'arbre secondaire tourne dans tous les modes de fonctionnement de la transmission (thermique, électrique, hybride). Le pignon fou à craboter sur le nouveau rapport, tourne à une vitesse différente de l'arbre secondaire. La synchronisation du pignon fou sur son arbre est indispensable. Lorsque le véhicule est à l'arrêt, les pignons secondaires peuvent être aussi au repos. Dans ce cas, on peut déplacer le baladeur pour craboter le pignon fou sans synchronisation.

Toutefois, le véhicule peut aussi être arrêté, sans pour autant que les pignons secondaires soient immobiles. C'est notamment le cas dans le mode de recharge bord de route de cette transmission, ou si le véhicule se met en mouvement après l'ordre de passage. Les dents du baladeur risquent alors de buter contre celle du pignon fou. Lorsque le véhicule est à l'arrêt, le choc de dentures est ressenti désagréablement par le conducteur.

La présente invention vise à assurer le bon crabotage du baladeur sur le pignon fou à l'arrêt, en supprimant les risques de choc de dentures.

Dans ce but, elle propose d'activer le déplacement du baladeur en translation vers le pignon sans synchronisation préalable, si les deux pièces sont immobiles en rotation lors de la demande de crabotage, et
- d'activer une rotation du pignon à l'issue de la course de vol libre du baladeur pour placer les dents de l'un à la place des trous de l'autre, si le seuil d'engagement du crabotage n'est pas franchi à l'issue d'une temporisation.

US 2008/314176 A divulgue le préambule de la revendication 1.

La présente invention sera mieux comprise à la lecture de la description suivante d'un mode de réalisation non limitatif de celle-ci, en se reportant aux dessins annexés, sur lesquels :
- la figure 1 représente une transmission hybride en mode de recharge bord de route, et
- la figure 2 illustre la stratégie proposée.

Dans la boîte de la figure 1 :
- le crabot du coupleur secondaire 13 est solidaire de l'arbre secondaire 10,
- le crabot du coupleur primaire 5 est solidaire de l'arbre primaire plein 1,
- la vitesse de rotation des pignons fous 11 et 12 est imposée par la vitesse de rotation du rotor de la machine électrique, soit de l'arbre primaire creux 6.

Si un ordre de crabotage est envoyé alors que l'une (au moins) des deux pièces à coupler tourne, la réalisation d'un crabotage passe par deux phases successives synchronisation des régimes, suivie d'un déplacement en translation du crabot. Les deux pièces à coupler (crabot et pignon fou de destination) doivent donc être synchronisées avant d'activer le déplacement en translation du crabot.

Dans la situation de recharge bord de route illustrée par la figure, le premier système de couplage est en position 3. Il lie en rotation l'arbre primaire plein 1 et l'arbre primaire creux 6. Le deuxième système de couplage 13 est ouvert. La transmission est donc au « point mort ». Le moteur thermique tournant peut entraîner la machine électrique fonctionnant alors en générateur, pour recharger les batteries (non représentées) du véhicule. Si le rotor de la machine électrique tourne, il entraîne les pignons fous 11, 12, par l'intermédiaire de l'arbre primaire creux 6. Par ailleurs, lorsque le véhicule est en déplacement, l'arbre secondaire 10 tourne, car est entraîné par les roues.

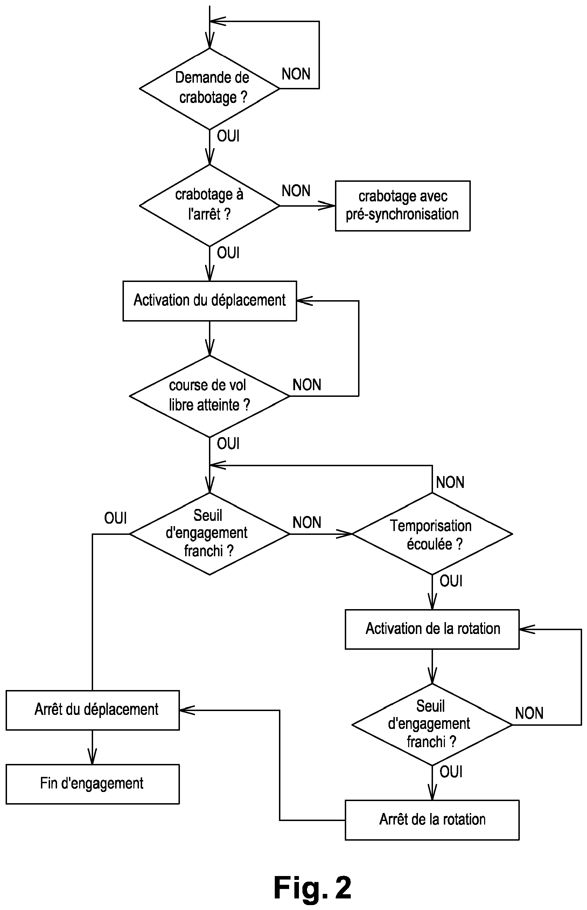

La méthode de la figure 2 permet de contrôler le crabotage à l'arrêt d'un pignon fou sur un arbre secondaire de boîte de vitesses à arbres parallèles, par déplacement en translation d'un baladeur solidaire en rotation de cet arbre, en direction du pignon, sans intervention d'organes de synchronisation mécaniques. Selon cette méthode, la demande de crabotage est suivie d'une vérification de l'état des pièces tournantes : si l'une des pièces (baladeur et/ou pignon) tourne, elles sont synchronisées avant de craboter (crabotage avec « pré-synchronisation »). Sinon, la situation de « crabotage à l'arrêt » est identifiée. Le déplacement du crabot en translation est activé, et se poursuit sur la course de « vol libre » du crabot. Si les dentures viennent en butée à l'issue du vol libre, le seuil d'engagement ne peut pas être franchi sans décaler les dentures : après une temporisation, on active la rotation du pignon fou (avec la machine électrique) pour décaler les dentures dans une position relative autorisant l'engagement, c'est-à-dire placer les dents de l'un en face des trous de l'autre. La rotation est arrêtée lorsque le seuil d'engagement est franchi.

En résumé, on active le déplacement du baladeur en translation vers le pignon sans synchronisation préalable, si les deux pièces sont immobiles lors de la demande de crabotage, et on active une rotation du pignon à l'issue de la course de vol libre du baladeur pour placer les dents de l'un à la place des trous de l'autre, si le seuil d'engagement du crabotage n'est pas franchi à l'issue d'une temporisation. En revanche, on synchronise le pignon fou avec le baladeur avant de le déplacer en translation, si l'une des deux pièces tourne lors de la demande de crabotage.

L'un des principaux avantages de la méthode est d'autoriser les crabotages directs, c'est-à-dire sans avoir besoin de faire tourner le pignon fou. Il existe en effet des situations où le pignon fou et le baladeur sont dans une position telle, que les dents de l'un sont en face des trous de l'autre. Le crabotage étant idéal, la traction est engagée sans le moindre heurt.

Dans les autres situations, la méthode prévoit de déplacer le baladeur en translation, jusqu'à ce qu'il arrive en butée dent contre dent, à la fin de sa course de vol libre. La mise en butée du baladeur est détectée par le fait qu'il n'arrive pas à aller au-delà de sa course de vol libre pour atteindre le seuil d'engagement.

Lorsque les dents du baladeur arrivent en butée sur celles du pignon fou, on envoie une consigne de couple à une machine d'entraînement du pignon, telle que la machine électrique 7 qui entraîne un arbre primaire de la boîte, lié en rotation au pignon fou (arbre primaire creux 6). Ainsi, on provoque la rotation du pignon fou, tout en continuant à pousser le baladeur. De cette façon, l'engagement intervient dès qu'une fenêtre de tir se présente.

Cette nouvelle approche permet de réaliser un crabotage, sans choc de dentures ressenti, lorsque le véhicule est arrêté. L'objectif atteint, est d'optimiser la qualité d'engagement, en allant jusqu'à le rendre imperceptible pour le conducteur.

## Revendications

1. Procédé de contrôle du crabotage à l'arrêt d'un pignon fou (11, 12) sur un arbre secondaire (10) de boîte de vitesses à arbres parallèles par déplacement d'un baladeur solidaire en rotation de cet arbre en direction du pignon sans intervention d'organes de synchronisation mécaniques, où, si l'un du pignon fou et d'un crabot du baladeur tourne lors de la demande de crabotage, la réalisation d'un crabotage passe par deux phases successives, de synchronisation des régimes du pignon fou et du crabot suivie du déplacement en translation du baladeur, **caractérisé en ce que**:
- si le crabot et le pignon fou sont immobiles en rotation lors de la demande de crabotage, on active le déplacement du baladeur en translation vers le pignon sans synchronisation préalable, et
- si le seuil d'engagement du crabotage n'est pas franchi à l'issue d'une temporisation, on active une rotation du pignon à l'issue de la course de vol libre du baladeur pour placer les dents de l'un à la place des trous de l'autre.

2. Procédé de contrôle selon la revendication 1, **caractérisé en ce qu'**on envoie une consigne de couple à une machine d'entraînement (7) du pignon, lorsque les dents du baladeur arrivent en butée sur celles du pignon fou, de façon à provoquer la rotation du pignon fou, tout en continuant à pousser le baladeur.

3. Procédé de contrôle selon la revendication 2, **caractérisé en ce que** la mise en butée du baladeur est détectée par le fait qu'il n'arrive pas à aller au-delà de sa course de vol libre pour atteindre son seuil d'engagement.

4. Procédé de contrôle selon la revendication 2 ou 3, **caractérisé en ce qu'**on envoie la consigne de couple à la machine d'entraînement qui est une machine électrique entraînant un arbre primaire de la boîte, lié en rotation au pignon fou.

## Patentansprüche

1. Verfahren zur Steuerung einer stationären Klauenkupplung eines Losrads (11, 12) auf einer Sekundärwelle (10) eines Parallelwellengetriebes durch Verschieben eines drehfest mit dieser Welle verbundenen Schieberads in Richtung des Losrads ohne Beteiligung von mechanischen Synchronisationsgliedern, wobei, wenn sich eines von dem Losrad und einer Klaue des Schieberads bei der Klauenkupplungsanforderung dreht, die Realisierung einer Klauenkupplung zwei aufeinanderfolgende Phasen durchläuft, der Synchronisierung der Drehzahlen des Losrads und der folgenden Klaue und der translatorischen Verschiebung des Schieberads, **dadurch gekennzeichnet, dass**:
- wenn die Klaue und das Losrad bei der Klauenkupplungsanforderung gegen Drehung gesichert sind, die translatorische Verschiebung des Schieberads zu dem Losrad ohne vorherige Synchronisation aktiviert wird, und
- wenn die Klauenkupplungseingriffsschwelle nach einer Verzögerungszeit nicht überschritten wird, eine Drehung des Losrads am Ende der Freiflugbewegung des Schieberads zum Platzieren der Zähne des einen an die Stelle der Löcher des anderen aktiviert wird.

2. Steuerverfahren nach Anspruch 1, **dadurch gekennzeichnet, dass** ein Drehmomentsollwert zu einer Antriebsmaschine (7) des Losrads übertragen wird, wenn die Zähne des Schieberads in Anlage an die des Losrads kommen, um die Drehung des Losrads unter Fortführung des Drückens des Schieberads zu bewirken.

3. Steuerverfahren nach Anspruch 2, **dadurch gekennzeichnet, dass** das in Anlagekommen des Schieberads dadurch detektiert wird, dass es nicht über seine Freiflugbewegung hinausgehen kann, um seine Eingriffsschwelle zu erreichen.

4. Steuerverfahren nach Anspruch 2 oder 3, **dadurch gekennzeichnet, dass** der Drehmomentsollwert zu der Antriebsmaschine, die eine elektrische Maschine ist, die eine drehfest mit dem Losrad verbundene Primärwelle antreibt, übertragen wird.

## Claims

1. Method for controlling the stationary dog clutching of an idler gearwheel (11, 12) on a secondary shaft (10) of a gearbox with parallel shafts by moving a sliding gear coupled in rotation with the shaft in the direction of the gearwheel without the intervention of mechanical synchronization members, wherein,
if one of the idler gearwheel and of a dog clutch of the sliding gear rotates during the request for dog clutching, the implementation of a dog clutching operation passes through two successive phases of synchronization of the speeds of the idler gear and of the dog clutch followed by the translational movement of the sliding gear, **characterized in that**:
- if the dog clutch and the idler gearwheel are rotationally immobile during the request for dog clutching, the translational movement of the sliding gear towards the gearwheel is activated without prior synchronization, and
- if the dog clutching engagement threshold has not been crossed at the end of a time delay, a rotation of the gearwheel is activated at the end of the free flight travel of the sliding gear in order to place the teeth of the one in the place of the holes of the other.

2. Control method according to Claim 1, **characterized in that** a torque setpoint is sent to a drive machine (7) for driving the pinion when the teeth of the sliding gear come into butting engagement with those of the idler gearwheel so as to cause the idler gearwheel to rotate while continuing to push the sliding gear.

3. Control method according to Claim 2, **characterized in that** the butting engagement of the sliding gear is detected by the fact that it is unable to continue beyond its free flight travel to reach its engagement threshold.

4. Control method according to Claim 2 or 3, **characterized in that** the torque setpoint is sent to the drive machine, which is an electric machine driving a primary shaft of the gearbox, coupled in rotation with the idler gearwheel.
